# EUROPÄISCHE PATENTSCHRIFT

(11) **EP 1 395 467 B1**
(45) Veröffentlichungstag und Bekanntmachung des Hinweises auf die Patenterteilung: **10.08.2005**
(21) Anmeldenummer: 01991707.9
(22) Anmeldetag: 29.12.2001
(51) Int. Cl.: B60S 1/04, B60S 1/34

(54) **SCHEIBENWISCHVORRICHTUNG, INSBESONDERE FÜR EIN KRAFTFAHRZEUG**
WINDSHIELD WIPER SYSTEM, ESPECIALLY FOR A MOTOR VEHICLE
DISPOSITIF D'ESSUIE-GLACE, EN PARTICULIER POUR UN VEHICULE AUTOMOBILE

(30) Priorität: 23.05.2001 DE 10125534; 26.06.2001 DE 10130705
(43) Veröffentlichungstag der Anmeldung: 10.03.2004
(73) Patentinhaber: ROBERT BOSCH GMBH, 70442 Stuttgart (DE)
(72) Erfinder: PETERS, Mario, 77855 Achern (DE); GEIS, Andreas, 77815 Buehl (DE)
(86) Internationale Anmeldenummer: PCT/DE2001/004945
(87) Internationale Veröffentlichungsnummer: WO 2002/094622

(56) Entgegenhaltungen:
- EP-A- 0 916 559
- WO-A-00/74984
- DE-A- 19 918 873

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen bekannt, die ein Wischerlager aufweisen, in dem eine Wischerwelle axial verschiebbar gelagert ist. Die Verschiebbarkeit der Wischerwelle dient dazu, bei einem Unfall die Wischerwelle unter definiertem Kraftaufwand in das Innere der Fahrzeugkarosserie gleiten zu lassen, um beispielsweise auf die Scheibenwischvorrichtung aufprallende Körper nicht zu verletzen (siehe zum Beispiel WO 00/74984).

Zur Sicherung der Wischerwellen in den Wischerlagern werden üblicherweise Axialsicherungsringe, Speednuts oder ähnliche Sicherungen verwendet. Die üblichen Axialsicherungsringe sind aufwendig, da sie eine Nut in der Wischerwelle erfordern, was die Welle durch die partielle Reduktion des Durchmessers schwächt. Werden Speednuts verwendet, so müssen die gehärteten Wischerwellen mit Rillen versehen werden, was diese wiederum verteuert und nur ein bestimmtes Raster für den Axialspielraum vorgibt.

Bei einer axialen Kraftwirkung auf die Wischerwelle halten diese Sicherungen bis zur Überwindung einer Durchbruchskraft stand. Anschließend läßt sich die Wischerwelle mit relativ wenig Widerstand weiter aus dem Wischerlager heraus schieben.

### Vorteile der Erfindung

Die erfindungsgemäße Scheibenwischvorrichtung mit den Merkmalen des Hauptanspruchs hat den Vorteil, dass eine Sicherung vorgesehen ist, die zumindest einen buchsenförmigen Abschnitt aufweist, der auf die Wischerwelle aufgeschoben ist und die Wischerwelle in seiner vollen Länge nur kraftschlüssig umgreift und nur mittels einer axialen Krafteinwirkung auf der Wischerwelle verschiebbar ist.

Durch die nur kraftschlüssige Verbindung zwischen Sicherung und Wischerwelle ist keine besondere Formgebung der Wischerwelle erforderlich. Weiterhin ist die Sicherung nur während der axialen Krafteinwirkung auf der Wischerwelle verschiebbar, wodurch während des gesamten Verschiebeprozesses kontinuierlich eine bestimmte Energiemenge vernichtet wird. Außerdem werden Durchmessertoleranzen der Wischerwelle und der Korrosionsschutzbeschichtung der Wischerwelle aufgefangen, wodurch in der Fertigung Ausschuß vermieden wird und Kosten reduziert werden können. Dadurch, daß der erste Abschnitt die Wischerwelle in seiner vollen Länge umgreift, können wesentlich höhere Verschiebekräfte vorgegeben werden, als dies beispielsweise bei Speednuts der Fall ist.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn der buchsenförmige erste Abschnitt der Sicherung nahezu bis zur Streckgrenze gedehnt ist. Auf diese Weise ist ein optimaler Sitz der Sicherung auf der Wischerwelle gewährleistet. Außerdem wird dadurch erreicht, dass die Sicherung nur bei einer hohen axialen Krafteinwirkung verschoben wird und sich nicht durch die eigene Massenträgheit im Laufe der Zeit verschiebt.

Schließt sich an den buchsenförmigen ersten Abschnitt ein rundlicher, flanschartiger zweiter Abschnitt mit einem glatten Übergang an, so kann die Sicherung auf die Wischerwelle aufgeschoben werden, ohne dass beispielsweise eine Korrosionsschutzbeschichtung, die auf der Wischerwelle aufgebracht ist, beschädigt wird.

Schließt sich an den flanschartigen zweiten Abschnitt ein ringförmiger dritter Abschnitt an, so wird vorteilhafterweise die Stabilität der Sicherung erhöht und die Auflage der Sicherung auf dem Wischerlager verbessert. Darüber hinaus kann der ringförmige dritte Abschnitt auch als Verschluß des Wischerlagers dienen.

Besonders vorteilhaft ist dabei, wenn die Sicherung am Wischerlager anliegt, und nur bei einer axialen Krafteinwirkung auf die Wischerwelle auf derselben verschiebbar ist. Auf diese Weise kann das axiale Lagerspiel der Wischerwelle im Wischerlager genau eingestellt werden. Weiterhin ist dadurch gewährleistet, dass die Wischerwelle nur dann verschoben wird, wenn eine hohe axiale Krafteinwirkung auf dieselbe wirkt, wie dies beispielsweise beim Aufprall eines Gegenstandes auf die Scheibenwischvorrichtung der Fall ist.

Besonders vorteilhaft ist es, wenn die Sicherung im Wesentlichen von S-förmiger Gestalt ist. Dadurch sind die Übergänge zwischen den buchsenförmigen, flanschartigen und ringförmigen Abschnitten glatt und stetig, wodurch keine Kanten entstehen, die die Wischerwelle oder eine darauf befindliche Korrosionsschutzschicht beschädigen können.

Außerdem ist die Sicherung dadurch einfach und kostengünstig herzustellen.

Ist die Sicherung stufenlos auf der Wischerwelle in axialer Richtung verschiebbar, so ist vorteilhafterweise das axiale Lagerspiel leicht einstellbar, da die Sicherung in jede Position auf der Wischerwelle geschoben werden kann.

Besonders vorteilhaft ist es, wenn die Sicherung zur Abdichtung des Wischerlagers dient, da auf diese Weise auf eine weitere Abdichtung verzichtet werden kann.

### Zeichnungen

Ein Ausführungsbeispiel der Erfindung ist in den Zeichnungen dargestellt und in der nachfolgenden Beschreibung näher erläutert. Es zeigen:
Figur 1 eine Scheibenwischvorrichtung in schematischer Darstellung,
Figur 2 einen Teilschnitt durch einen Lagerbereich einer erfindungsgemäßen Scheibenwischvorrichtung.
Figur 3 einen Querschnitt durch eine Sicherung einer erfindungsgemäßen Scheibenwischvorrichtung und

### Beschreibung des Ausführungsbeispiels

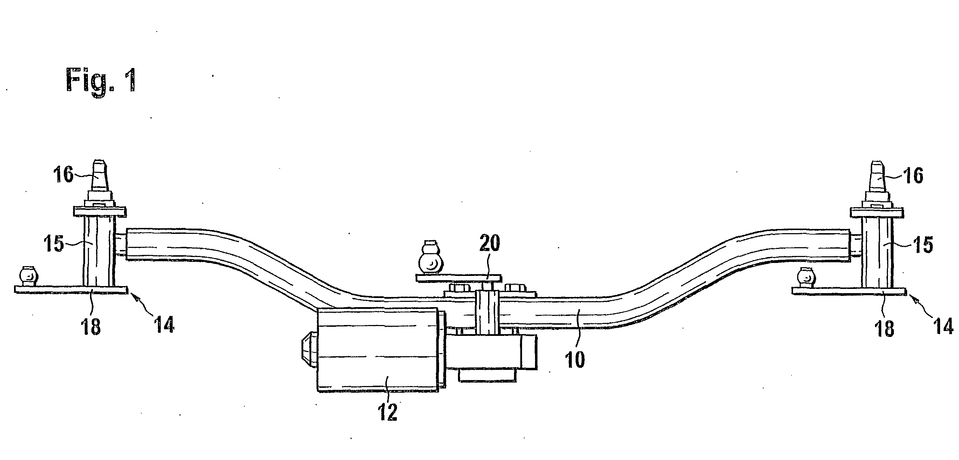

In Figur 1 ist eine erfindungsgemäße Scheibenwischvorrichtung schematisch dargestellt. Diese besteht im Wesentlichen aus einem Trägerrohr 10, an dem ein Wischermotor 12 befestigt ist. Das Trägerrohr 10 weist zwei Enden auf, an denen jeweils ein Wischerlager 14 befestigt ist. Natürlich können das Tragerrohr 10 und die Wischerlager 14 auch einstückig ausgebildet sein.

Das Wischerlager 14 besteht im Wesentlichen aus einem rohrförmigen Abschnitt 15, der von einer Wischerwelle 16 durchgriffen wird. Die Wischerwelle 16 selbst, ist an einem Ende mit einer Antriebskurbel 18 drehfest verbunden, die über eine der übersichtlichkeit wegen nicht gezeichnete Schubstange mit einer vom Wischermotor 12 angetriebenen Abtriebskurbel 20 verbunden ist.

Im Betrieb führt die Abtriebskurbel 20 eine Rotations- oder eine Hin- und Herbewegung durch, wodurch über die Schubstange die Antriebskurbel 18 und damit die Wischerwelle 16 in eine Pendelbewegung versetzt wird.

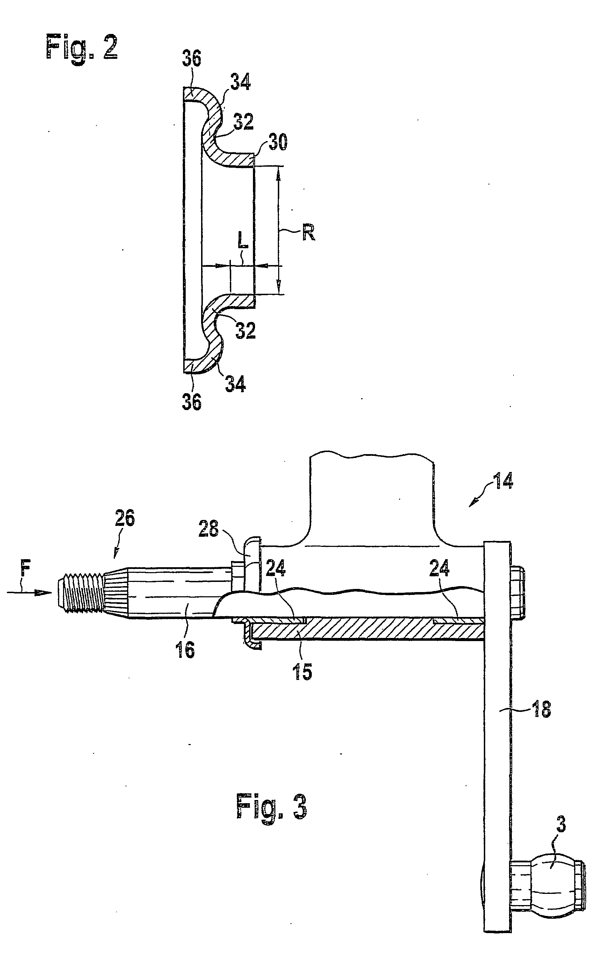

In Figur 2 ist das Wischerlager 14 mit der Wischerwelle 16 in einer Teilschnittdarstellung detailliert dargestellt.

Das Wischerlager 14 besteht im Wesentlichen aus einem rohrförmigen Abschnitt 15, in dem zwei Lagerschalen 24 angeordnet sind. Der rohrförmige Abschnitt 15 wird dabei von der Wischerwelle 16 in voller Länge durchgriffen. An einem Ende ist die Wischerwelle 16 mit der Antriebskurbel 18 drehfest verbunden. Am anderen Ende weist die Wischerwelle ein Konuselement 26 auf, mit dem sie mit einem nicht dargestellten Wischerarm drehfest verbindbar ist.

Auf die Wischerwelle 16 ist eine Sicherung 28 aufgeschoben, so dass diese direkt am rohrförmigen Abschnitt 15 anliegt. Auf diese Weise kann das axiale Lagerspiel der Wischerwelle 16 genau eingestellt werden.

In Figur 3 ist ein Querschnitt durch die Sicherung 28 im Detail dargestellt.

Die Sicherung 28 besteht dabei im Wesentlichen aus einem buchsenförmigen ersten Abschnitt 30, der im wesentlichen die Form eines Hohlzylinders mit der Länge L, dessen Innendurchmesser etwas kleiner als der Durchmesser der Wischerwelle 16 ist.

An diesen schließt sich ein flanschartiger zweiter Abschnitt 32 in Form eines ersten Radius an. Dadurch ergibt sich beim Aufschieben der Sicherung 28 auf die Wischerwelle 16 ein glatter Übergang ohne Kanten, so dass eine Korrosionsschutzbeschichtung auf der Wischerwelle 16 nicht beschädigt wird. Ist die Sicherung 28 auf die Wischerwelle 16 aufgeschoben, so umgreift der erste Abschnitt 30 die Wischerwelle 16 in seiner vollen Länge L um eine maximale Auflagefläche und damit eine maximale Kraftübertragung zu erreichen.

An den flanschartigen zweiten Abschnitt 32 schließt sich direkt ein zweiter Radius 34 an, dessen Krümmung sich umgekehrt zu der Krümmung des zweiten Abschnitts 32 verhält. An diesem zweiten Radius 34 schließt sich ein ringförmiger dritter Abschnitt 36 an, der parallel zum buchsenförmigen ersten Abschnitt 30 verläuft.

Die Sicherung 28 entspricht somit einem Rotationskörper, dessen Halbquerschnitt im Wesentlichen einer S-Form entspricht und die beiden Enden der S-Form durch zwei Parallelen etwas verlängert sind.

Der Innendurchmesser R des buchsenförmigen ersten Abschnitts 30 der Sicherung 28 wird dabei so gewählt, dass der buchsenförmige Abschnitt beim Aufschieben auf die Wischerwelle 16 bis an die Streckgrenze des Materials, aus dem dieser besteht, aufgeweitet wird. Dadurch ist gewährleistet, dass im buchsenförmigen ersten Abschnitt 30 der Sicherung 28 Streckspannung, und somit ein sehr genau definierter Spannungszustand herrscht.

Im Folgenden wird die Funktion der Sicherung 28 kurz erläutert.

Bei einer axialen Krafteinwirkung auf das wischerarmseitige Ende der Wischerwelle 16 wird diese in Richtung des Wischerlagers 14 geschoben. Der flanschartige zweite Abschnitt 32 der Sicherung 28 stößt, nach Überwindung des axialen Lagerspiels, an den rohrförmigen Abschnitt 15 des Wischerlagers 14. Dadurch setzt die Sicherung 28 dieser axialen Verschiebung der Wischerwelle 16 einen Widerstand entgegen. Nur bei ausreichender axialer Krafteinwirkung F gleitet die Wischerwelle 16 weiter in Richtung des rohrförmigen Abschnitts 22.

## Patentansprüche

1. Scheibenwischvorrichtung, insbesondere für ein Kraftfahrzeug, mit einem Wischerlager (14) in dem eine Wischerwelle (16) angeordnet ist, **dadurch gekennzeichnet, daß** eine Sicherung (28) vorgesehen ist, die zumindest einen, auf die Wischerwelle (16) aufgeschobenen, buchsenförmigen ersten Abschnitt (30) aufweist, der die Wischerwelle (16) in seiner vollen Länge nur kraftschlüssig umgreift, so daß die Wischerwelle (16) nur durch eine axiale Krafteinwirkung (F) gegenüber dem Wischerlager (14) verschiebbar ist und der erste Abschnitt (30) am Wischerlager (14) anschlägt.

2. Scheibenwischvorrichtung nach Anspruch 1, **dadurch gekennzeichnet, daß** der buchsenförmige erste Abschnitt (30) der Sicherung (28) nahezu bis zur Streckgrenze gedehnt ist.

3. Scheibenwischvorrichtung nach einem der vorhergehenden Ansprüche, **dadurch gekennzeichnet, daß** sich an den buchsenförmigen ersten Abschnitt (30) ein flanschartiger zweiter Abschnitt (32) anschließt.

4. Scheibenwischvorrichtung nach Anspruch 3, **dadurch gekennzeichnet, daß** sich an den flanschartigen zweiten Abschnitt (32) über einen Radius (34) ein ringförmiger dritter Abschnitt (36) anschließt.

5. Scheibenwischvorrichtung nach einem der vorhergehenden Ansprüche, **dadurch gekennzeichnet, daß** die Sicherung (28) am Wischerlager (14) anliegt und bei einer axialen Krafteinwirkung (F) auf die Wischerwelle (16) auf derselben verschiebbar ist.

6. Scheibenwischvorrichtung nach einem der vorhergehenden Ansprüche, **dadurch gekennzeichnet, daß** die Sicherung (28) vom im wesentlichen S-förmiger Gestalt ist.

7. Scheibenwischvorrichtung nach einem der vorhergehenden Ansprüche, **dadurch gekennzeichnet, daß** die Sicherung stufenlos auf der Wischerwelle (16) in axialer Richtung verschiebbar ist.

8. Scheibenwischvorrichtung nach einem der vorhergehenden Ansprüche, **dadurch gekennzeichnet, daß** die Sicherung (28) zur Abdichtung des Wischerlagers (14) dient.

## Claims

1. Windscreen wiper device, especially for a motor vehicle, having a wiper bearing (14) in which a wiper shaft (16) is arranged, **characterized in that** a securing means (28) is provided which has at least one bushing-shaped first section (30), which is slid onto the wiper shaft (16) and only frictionally fits around the wiper shaft (16) over its full length, so that the wiper shaft (16) is displaceable relative to the wiper bearing (14) only by means of an axial application of force (F) and the first section (30) strikes against the wiper bearing (14).

2. Windscreen wiper device according to Claim 1, **characterized in that** the bushing-shaped first section (30) of the securing means (28) is stretched virtually as far as the yield point.

3. Windscreen wiper device according to one of the preceding claims, **characterized in that** the bushing-shaped first section (30) is adjoined by a flange-like second section (32).

4. Windscreen wiper device according to Claim 3, **characterized in that** the flange-like second section (32) is adjoined over a radius (34) by an annular third section (36).

5. Windscreen wiper device according to one of the preceding claims, **characterized in that** the securing means (28) bears against the wiper bearing (14) and, in the case of an axial application of force (F) on the wiper shaft (16), is displaceable on the same.

6. Windscreen wiper device according to one of the preceding claims, **characterized in that** the securing means (28) is of essentially S-shaped design.

7. Windscreen wiper device according to one of the preceding claims, **characterized in that** the securing means is displaceable steplessly in the axial direction on the wiper shaft (16).

8. Windscreen wiper device according to one of the preceding claims, **characterized in that** the securing means (28) is used for sealing the wiper bearing (14).

## Revendications

1. Dispositif d'essuie-glace, notamment pour un véhicule automobile, comprenant un palier d'essuie-glace (14) dans lequel est disposé un arbre d'essuie-glace (16),
**caractérisé en ce qu'**
un dispositif de sécurité (28) est prévu qui présente au moins un premier segment (30) en forme de douille emmanché sur l'arbre d'essuie-glace (16) et n'entourant l'arbre d'essuie-glace (16) sur toute sa longueur que par complémentarité de forces, de telle sorte que l'arbre d'essuie-glace (16) n'est déplaçable par rapport au palier d'essuie-glace (14) que par un effet de force (F) axial, et le premier segment (30) bute contre le palier d'essuie-glace (14).

2. Dispositif d'essuie-glace selon la revendication 1,
**caractérisé en ce que**
le premier segment (30) en forme de douille du dispositif de sécurité (28) est étendu sensiblement jusqu'à la limite d'étirement.

3. Dispositif d'essuie-glace selon l'une quelconque des revendications précédentes,
**caractérisé en ce qu'**
un deuxième segment (32) en forme de bride est raccordé au premier segment (30) en forme de douille.

4. Dispositif d'essuie-glace selon la revendication 3,
**caractérisé en ce qu'**un troisième segment (36) annulaire est raccordé au deuxième segment (32) en forme de bride sur un rayon (34).

5. Dispositif d'essuie-glace selon l'une quelconque des revendications précédentes,
**caractérisé en ce que**
le dispositif de sécurité (28) est appliqué contre le palier d'essuie-glace (14) et déplaçable sur l'arbre d'essuie-glace (16) lors d'un effet de force (F) axial sur celui-ci.

6. Dispositif d'essuie-glace selon l'une quelconque des revendications précédentes,
**caractérisé en ce que**
le dispositif de sécurité (28) a essentiellement la forme d'un S.

7. Dispositif d'essuie-glace selon l'une quelconque des revendications précédentes,
**caractérisé en ce que**
le dispositif de sécurité coulisse dans la direction axiale sur l'arbre d'essuie-glace (16).

8. Dispositif d'essuie-glace selon l'une quelconque des revendications précédentes,
**caractérisé en ce que**
le dispositif de sécurité (28) étanche le palier d'essuie-glace (14).
